# EUROPÄISCHE PATENTSCHRIFT

(11) **EP 2 185 394 B1**
(45) Veröffentlichungstag und Bekanntmachung des Hinweises auf die Patenterteilung: **16.04.2014**
(21) Anmeldenummer: 08784245.6
(22) Anmeldetag: 21.06.2008
(51) Int. Cl.: B60T 17/22, F15B 21/04

(54) **ANLAGE ZUR VAKUUMDRUCKBEFÜLLUNG VON BAUGRUPPEN MIT GASFÖRMIGEN ODER FLÜSSIGEN MEDIEN**
SYSTEM FOR VACUUM FILLING COMPONENTS WITH GASEOUS OR LIQUID MEDIA
INSTALLATION DE REMPLISSAGE D'ORGANES SOUS PRESSION SOUS VIDE AVEC DES AGENTS LIQUIDES OU GAZEUX

(30) Priorität: 23.06.2007 DE 102007029020
(43) Veröffentlichungstag der Anmeldung: 19.05.2010
(73) Patentinhaber: Dürr Somac GmbH, 09366 Stollberg (DE)
(72) Erfinder: KEMTER, Torsten, 09557 Flöha (DE); SPREER, Wolfgang, 09236 Clausnitz (DE)
(74) Vertreter: Patentanwälte Findeisen & Neumann
(86) Internationale Anmeldenummer: PCT/DE2008/001043
(87) Internationale Veröffentlichungsnummer: WO 2009/000253

(56) Entgegenhaltungen:
- US-A- 4 306 594
- US-A- 4 959 960
- US-A- 5 060 703
- US-A- 5 088 529

## Beschreibung

Die Erfindung betrifft eine Anlage zur Vakuumdruckbefüllung von Baugruppen mit gasförmigen oder flüssigen Medien, insbesondere zur Erstbefüllung von Gehäusen, Kreisläufen, Ausgleichbehältern und dergleichen Baugruppen an Kraftfahrzeugen mit Betriebsstoffen, bestehend aus zumindest einer Vakuumstrecke, einer Füllstrecke und einer Rücksaugstrecke, wobei die Füllstrecke in Flüssrichtung als wesentliche Bauteile einen Tank, einen Kugelhahn, eine Pumpe, einen Abzweig zu einer Druckentlastungsleitung, einen Filter sowie einen Adapter zur Wirkverbindung mit der zu befüllenden Baugruppe umfasst.

Für zahlreiche technische Anwendungen müssen Behälter mit Flüssigkeiten oder Gasen gefüllt werden. Ein diesbezüglich typisches Anwendungsgebiet sind Fertigungslinien in der Automobilindustrie, an denen für Kraftfahrzeuge eine Erstbefüllung von Gehäusen, Kreisläufen, Ausgleichbehältern und dergleichen Baugruppen mit Kraft-, Schmier-, Kühl- und sonstigen Betriebsstoffen realisiert werden muss.

In DE 196 42 239 C2 wird eine technische Lösung zum Befüllen eines Behälters mit Bremsflüssigkeit beschrieben. Der Behälter, der mindestens eine Kammer mit mindestens einem Ablauf aufweist, wird vor dem Befüllen mit einem Überdruck oder Unterdruck beaufschlagt.

Aus DE 199 10 331 A 1 ist ein Verfahren zur Erstbefüllung eines Kraftstoffsystems bekannt, bei dem durch gleichzeitiges Betätigen von zumindest zwei im Fahrzeug vorgesehenen Bedienelementen die Kraftstoffpumpe zur Befüllung des Kraftstoffsystems betrieben wird.

DE 101 64 355 A 1 betrifft ein Hydraulikbremssystem, das zwei Kammern vor einem Druckkolben aufweist. Dabei ist eine aufwendige hydraulische Schaltung vorgesehen, mit der eine Vorrichtung zur Erstbefüllung mit Bremsflüssigkeit alternativ freigeschaltet oder abgeschaltet werden kann.

Dokument US 4 959 960 offenbart eine Anlage zur Vakuumdruckbefüllung gemäß dem Oberbegriff des Anspruchs 1.

Unabhängig von der jeweils konkreten Ausgestaltung werden für die Erstbefüllung von Kraftfahrzeugen an Fertigungslinien zunehmend Füllanlagen eingesetzt, die nach dem Prinzip der Vakuum-Druck-Befüllung arbeiten. Derartige Füllanlagen bestehen prinzipiell aus Hydraulikschränken verschiedener Ausführungsformen und einem mit einem Schlauch versehenen Adapter. Dieser Adapter wird vom Werker auf das Fahrzeug adaptiert und stellt die Schnittstelle zum Fahrzeug dar.

Die Füllanlage ist in verschiedene hydraulische Leitungen (sog. "Strecken") unterteilt, insbesondere in eine Vakuumstrecke, eine Füllstrecke und eine Rücksaugstrecke. Die Vakuumstrecke enthält üblicherweise eine Vakuumpumpe, mit welcher der Tank evakuiert werden kann sowie zwei im Adapter integrierte Ventile. Die Füllstrecke weist in Flussrichtung überwiegend einen Tank, einen Kugelhahn, eine Pumpe, einen Abzweig zu einer Druckentlastungsleitung mit einem Druckbegrenzungs- oder Proportionalventil, einen Filter, einen Durchflussmesser sowie ebenfalls zwei im Adapter integrierte Ventile auf.

Bei Anwendung einer solchen Füllanlage wird die zu befüllende Baugruppe am Fahrzeug zunächst evakuiert. Danach wird solange befüllt, bis sich in dieser Baugruppe ein messbarer Gegendruck einstellt. Eine Beschädigung bzw. im Extremfall das Bersten der zu befüllenden Baugruppe wird vermieden, indem der maximale Fülldruck innerhalb der Anlage begrenzt wird. Anschließend erfolgt mit dem im Tank erzeugten Vakuum das Absaugen der zu befüllenden Baugruppe bis auf das gewünschte Niveau.

Mit dieser üblichen Ausgestaltung einer Füllanlage wird ein guter Anlagen- und Pumpenschutz erreicht. Nachteilig ist jedoch, dass der Maximaldruck sehr weit entfernt vom Druck begrenzenden Behälter reduziert wird. Die in der Füllstrecke angeordneten Bauteile (Volumenzähler, Filter usw.) behindern einen schnellen Druckabbau entgegen der Füllrichtung beim Erreichen des Behältergegendruckes.

Aufgabe der Erfindung ist es, eine Anlage zur Vakuumdruckbefüllung von Baugruppen zu schaffen, mit welcher der maximale Druck in unmittelbarer Nähe der zu befüllenden Baugruppe beeinflusst werden kann. Dabei sollen höhere Fülldrücke und folglich eine höhere Füllgeschwindigkeit erreichbar sein.

Diese Aufgabe wird gelöst, indem in der Vakuumstrecke ein T-Stück angeordnet ist, dem eine zusätzliche Druckentlastungsleitung zugeordnet ist. Das T-Stück wird durch ein Druckbegrenzungsventil gebildet, das in einer ersten Ausführung druckgesteuert oder druckgeregelt betätigt wird. Somit kann der in der zu füllenden Baugruppe entstehende Gegendruck sehr schnell beeinflusst werden. Dies kann sowohl pneumatisch über eine Druckregler-Ventilkombination als auch über Proportionaltechnik erfolgen.

Eine vorteilhafte Ausgestaltung wird durch Anordnung eines Druckmessumformers im Adapter erreicht. Hiermit wird eine sehr feinfühlige Steuerung bzw. Regelung möglich, wobei die Drucksäule in "Flussrichtung" abgebaut wird.

In weiterer nicht erfindungsgemäßer Ausgestaltung wird vorgeschlagen, dass im Adapter ein zusätzliches Ventil angeordnet wird, das ebenfalls alternativ über Druckregler- oder Proportionaltechnik betätigt werden kann. Bei dieser Variante kann das Rücksaugen unter Beachtung der Strömungsverhältnisse über das zusätzliche Ventil erfolgen. Demzufolge bleibt die Adapterfüllleitung ständig mit dem jeweiligen Medium gefüllt, so dass eine Verfüllung von Luft ausgeschlossen wird. Die Vakuumleitung bleibt "trocken", so dass im eigentlichen Evakuierprozess bessere Vakuumwerte erreicht werden können.

Mit der erfindungsgemäßen Anlage kann der maximale Druck in unmittelbarer Nähe der zu befüllenden Baugruppe beeinflusst werden. Dadurch sind höhere Fülldrücke und in deren Folge auch höhere Füllgeschwindigkeiten erreichbar, wobei eine Verringerung der Füllzeit von fast 30% zu erwarten ist. Die verkürzte Füllzeit bewirkt insbesondere bei industrieller Befüllung großer Behälter (z.B. Baugruppen von LKW) wesentliche Vorteile. Als weitere Vorteile sind eine Verbesserung von Anlagenperformance und Prozesssicherheit zu nennen.

Diese Anlage ist für verschiedenartige Füllanlagen geeignet, die nach dem Prinzip der Vakuum-Druck-Befüllung arbeiten und in denen die zu füllende Baugruppe das für den Prozess druckbegrenzende Element ist. Eine diesbezüglich bevorzugte Anwendung ist die Erstbefüllung von Gehäusen, Kreisläufen, Ausgleichbehältern und dergleichen Baugruppen an Kraftfahrzeugen mit Betriebsstoffen.

Ein Ausführungsbeispiel der Erfindung ist in der Zeichnung dargestellt und wird nachfolgend beschrieben. Es zeigen:
- Fig. 1: den grundsätzlichen Aufbau einer erfindungsgemäßen Anlage
- Fig. 2: eine gegenüber Fig. 1 etwas modifizierte Anlage, wobei hier lediglich die Anordnung eines zusätzlichen Ventils dargestellt werden soll

Die in der Zeichnung dargestellte Anlage ist zur Vakuumdruckbefüllung von Baugruppen mit gasförmigen oder flüssigen Medien konzipiert, beispielsweise für eine Erstbefüllung von Gehäusen, Kreisläufen, Ausgleichbehältern und dergleichen Baugruppen an Kraftfahrzeugen. Die Anlage besteht grundsätzlich aus zumindest einer Vakuumstrecke, einer Füllstrecke und einer Rücksaugstrecke.

Die Vakuumstrecke enthält eine Vakuumpumpe VP 6 sowie zwei Ventile V 6 und V 56 in einem Adapter, über den eine Wirkverbindung mit der zu befüllenden Baugruppe realisiert wird. Vorzugsweise ist im Adapter ein Druckmessumformer DU 1 angeordnet. Mittels der Vakuumpumpe VP 6 kann ein Tank T 1 evakuiert werden. Mit dem im Tank T 1 erzeugten Vakuum erfolgt über ein Ventil V 61 das Rücksaugen der zu füllenden Behälter.

Die Füllstrecke umfasst in Flussrichtung als wesentliche Bauteile den Tank T 1, einen Kugelhahn K 1, eine Pumpe P 1, einen Abzweig zu einer Druckentlastungsleitung mit einem Druckbegrenzungsventil DBV 1 (alternativ auch als Proportionalventil möglich), einen Filter F 1, einen Durchflussmesser VZ 1 und zwei Ventile V 1 und V 51 in einem Adapter.

Ein derartiger Aufbau einer Anlage zur Vakuumdruckbefüllung und deren Funktionsweise sind grundsätzlich bekannt, so dass an dieser Stelle auf nähere diesbezügliche Darlegungen verzichtet werden kann. Wesentlich im vorliegenden Sachverhalt ist jedoch der in der Zeichnung mit "A" bezeichnete Anlagenteil, der die erfindungsgemäße Lösung umfasst und der nachfolgend näher beschrieben wird.

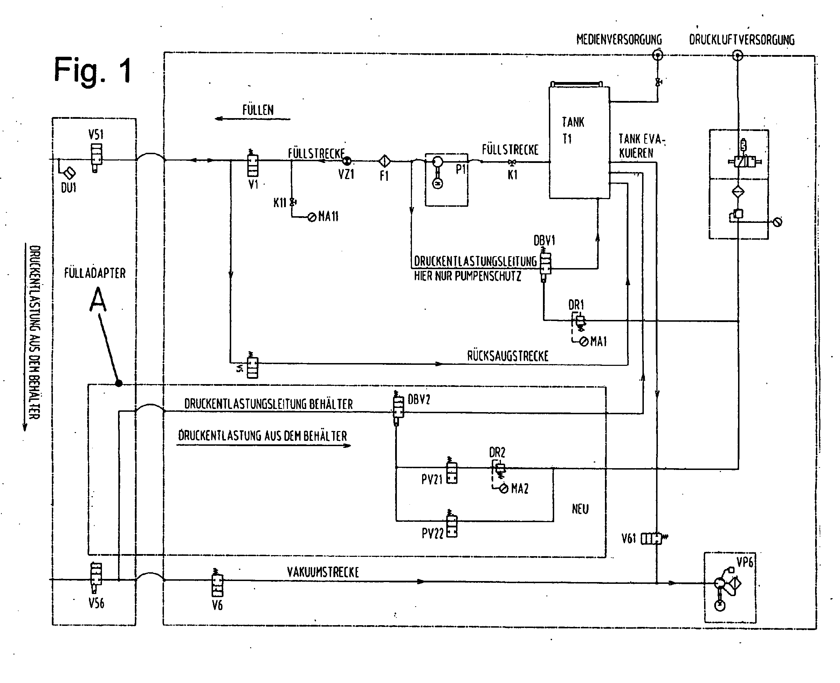

Gemäß Fig. 1 ist in der Vakuumstrecke ein T-Stück angeordnet, dem eine zusätzliche Druckentlastungsleitung zugeordnet ist. Das funktionell als T-Stück wirkende Druckbegrenzungsventil DBV 2 wird druckgesteuert oder druckgeregelt betätigt. Dies kann pneumatisch über eine in der Zeichnung dargestellte Druckregler-Ventilkombination mit den Komponenten DR 2 / PV 21 / PV 22 erfolgen. Alternativ kann hierfür Proportionaltechnik eingesetzt werden.

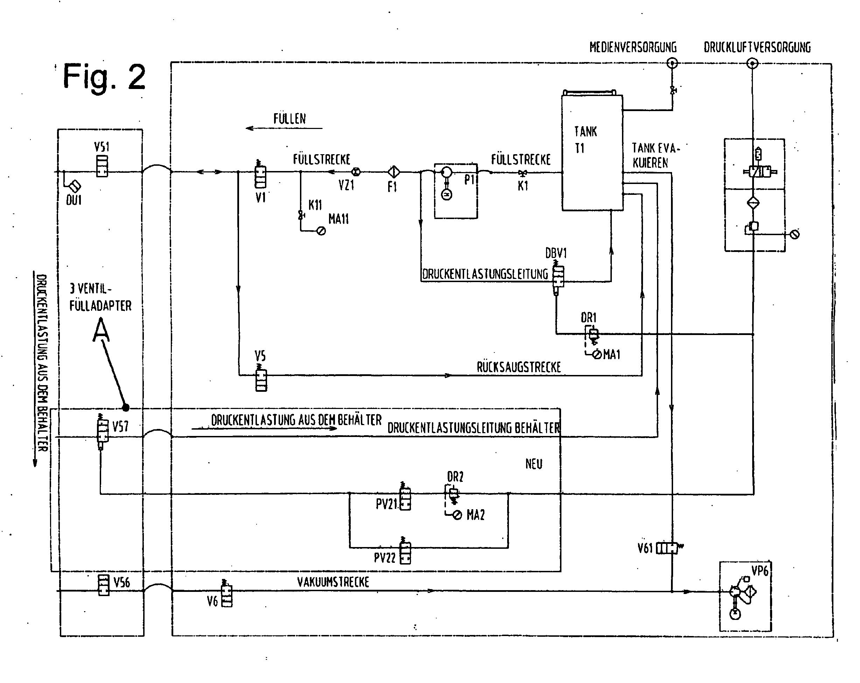

Fig. 2 zeigt eine etwas modifizierte Ausführung, bei der im Adapter ein zusätzliches Ventil V 57 angeordnet ist. Auch dieses Ventil V 57 kann druckgesteuert bzw. druckgeregelt oder mittels Proportionaltechnik betätigbar ausgestaltet werden.

### Bezugszeichenliste

- DBV 1: Druckbegrenzungsventil
- DBV 2: Druckbegrenzungsventil

- DR 2 / PV 21 / PV 22: Druckregler-Ventilkombination

- DU 1: Druckmessumformer
- F 1: Filter
- K 1: Kugelhahn

- P 1: Pumpe
- VP 6: Vakuumpumpe

- V 1: Ventil
- V 6: Ventil
- V 51: Ventil
- V 56: Ventil
- V 57: Ventil
- V 61: Ventil

- VZ 1: Durchflussmesser
- T 1: Tank

## Patentansprüche

1. Anlage zur Vakuumdruckbefüllung von Baugruppen mit gasförmigen oder flüssigen Medien, insbesondere zur Erstbefüllung von Gehäusen, Kreisläufen, Ausgleichbehältern und dergleichen Baugruppen an Kraftfahrzeugen mit Betriebsstoffen, bestehend aus zumindest einer Vakuumstrecke, einer Füllstrecke und einer Rücksaugstrecke, wobei die Füllstrecke in Flussrichtung als wesentliche Bauteile einen Tank, einen Kugelhahn, eine Pumpe, einen Abzweig zu einer Druckentlastungsleitung, einen Filter sowie einen Adapter zur Wirkverbindung mit der zu befüllenden Baugruppe umfasst, **dadurch gekennzeichnet,**
**dass** in der Vakuumstrecke ein T-Stück angeordnet ist, dem eine zusätzliche Druckentlastungsleitung zugeordnet ist, wobei das T-Stück durch ein Druckbegrenzungsventil (DBV 2) gebildet ist, dem eine pneumatische Druckregler-Ventilkombination (DR 2; PV 21; PV 22) zugeordnet ist und wobei das Druckbegrenzungsventil (DBV 2) druckgesteuert oder druckgeregelt oder mittels Proportionaltechnik betätigbar ist.

## Claims

1. An installation for filling assemblies with gaseous or liquid media under vacuum pressure, especially for the initial filling of housings, circuits, expansion tanks and similar assemblies in motor vehicles with fuels, consisting of at least one vacuum line, one filling line and one recirculation line, wherein the filling line comprises as essential components in the direction of flow a tank, a ball valve, a pump, a branch to a pressure relief line, a filter and an adapter for an operative connection with the assembly to be filled, **characterized in that**,
a T-fitting is arranged in the vacuum line, to which an additional pressure relief line is assigned, wherein said T-fitting is formed by a pressure relief valve (DBV 2), to which a pneumatic valve combination for pressure control (DR 2; PV 21; PV 22) is assigned, and wherein said pressure relief valve (DBV 2) is regulated or controlled by pressure or is operated using proportional technology.

## Revendications

1. Installation de remplissage d'organes sous pression et sous vide de fluides liquides ou gazeux, notamment pour le tout premier remplissage de boîtiers, circuits, réservoirs de compensation et d'autres organes d'automobiles, de matières consommables, cette installation étant composée d'au moins une ligne sous vide, une ligne de remplissage et une ligne de refoulement, où la ligne de remplissage comporte, en tant qu'éléments principaux disposés en sens du flux, un réservoir, une vanne à boisseau sphérique, une pompe, une dérivation vers une conduite de décharge de pression, un filtre et un adaptateur permettant la liaison mécanique entre l'installation de remplissage et l'organe à remplir, **caractérisé en ce**
**que** dans la ligne sous vide est prévue une pièce en T et une conduite de décharge de pression supplémentaire, la pièce en T étant formée par un limiteur de pression (DBV 2) qui, lui, est raccordé à un système combiné de régulation de pression et de soupape de refoulement à commande pneumatique (DR 2; PV 21; PV 22), où le limiteur de pression (DBV 2) fonctionne en tant que vanne à commande par pression, valve de réglage de pression ou qu'il est actionné par une valve proportionnelle.
